# EUROPEAN PATENT APPLICATION

(11) **EP 2 592 367 A2**
(43) Date of publication of application: **15.05.2013**
(21) Application number: 12191501.1
(22) Date of filing: 06.11.2012
(51) Int. Cl.: F25B 7/00, F25B 25/00, F25B 47/02

(54) **Refrigeration cycle apparatus and hot water producing apparatus**

(30) Priority: 14.11.2011 JP 2011248329
(71) Applicant: Panasonic Corporation, Kadoma-shi Osaka 571-8501 (JP)
(72) Inventor: MATSUI, Masaru, OSAKA, 540-6207 (JP); MORIWAKI, Shunji, OSAKA, 540-6207 (JP); AOYAMA, Shigeo, OSAKA, 540-6207 (JP)
(74) Representative: Eisenführ, Speiser & Partner

(57) **Abstract**

A refrigeration cycle apparatus includes a low temperature-side refrigeration cycle 110, a high temperature-side refrigeration cycle 120, defrosting detecting means 116 which detects a frost-formed state of the low temperature-side refrigeration cycle 110, and a controller 140. When an operation should be shifted to a defrosting operation for thawing frost of the low temperature-side evaporator 114, an operation of the low temperature-side compressor 111 of the low temperature-side refrigeration cycle 110 is continued, an operation of the high temperature-side compressor 121 of the high temperature-side refrigeration cycle 120 is stopped, and the operation is shifted to the defrosting operation. When the operation is shifted to the defrosting operation, heat-accumulated high temperature low temperature-side refrigerant is supplied to the low temperature-side evaporator 114 to defrost. Therefore, it is possible to shorten the defrosting time and to enhance the operation efficiency of a refrigeration cycle.

## Description

### [Technical Field]

The present invention relates to defrosting control in a cascade refrigeration cycle apparatus.

### [Background Technique]

Conventionally, there is a heat pump hot water producing apparatus capable of heating a heating medium, e.g., water to 65 to 80°C utilizing a cascade refrigeration cycle which includes a high temperature-side refrigeration cycle and a low temperature-side refrigeration cycle (see patent document 1 for example).
A high temperature-side refrigerant flowing through the high temperature-side refrigeration cycle is evaporated by condensation heat of a low temperature-side refrigerant flowing through the low temperature-side refrigeration cycle. A refrigerant-heating medium heat exchanger disposed in the high temperature-side refrigeration cycle heats a heating medium to a temperature as high as 65 to 80°C using condensation heat of the high temperature-side refrigerant, and the refrigerant-heating medium heat exchanger is used for heating a room or the like.
According to a method of heating a heating medium using a hot water producing apparatus of a cascade refrigeration cycle, energy consumption can be reduced as compared with a method of heating a heating medium to a temperature as high as 65 to 80°C using one refrigeration cycle.
In such a hot water producing apparatus, when a defrosting operation for thawing frost attached to a low temperature-side evaporator is carried out, generally, refrigerant regular routes of the high temperature-side refrigeration cycle and the low temperature-side refrigeration cycle are inversed, a high temperature discharged refrigerant of the low temperature-side refrigeration, cycle is supplied directly to the evaporator to thaw frost (see patent document 2 and 3 for example).

Fig. 7 shows a control flow of the patent document 2.
An operation of a refrigeration cycle apparatus is started (step 101), and if a normal operation is carried out (step 102), it is determined whether the operation should be shifted to a defrosting operation (step 103). If it is determined in step 103 that the operation should be shifted to the defrosting operation, a low temperature-side compressor is once stopped (step 104), a flowing direction of a refrigerant in a low temperature-side refrigeration cycle is reversed (step 105), a low temperature-side compressor is restarted, and the defrosting operation is carried out only of the low temperature-side refrigeration cycle (step 106).
If the defrosting operation in the low temperature-side refrigeration cycle is started in step 106, a timer is reset (step 107), and timer count is carried out (step 108).
If the timer count satisfies a predetermined condition (predetermined time is elapsed, or compressor suction superheat degree of high temperature-side refrigeration cycle becomes equal to or lower than predetermined value after defrosting operation is started) (step 109), a high temperature-side compressor is once stopped (step 110), a flowing direction of a refrigerant of the high temperature-side refrigeration cycle is reversed (step 111), the high temperature-side compressor is restarted, both the low temperature-side and high temperature-side refrigeration cycles are operated and the defrosting operation is carried out (step 112).
If it is determined that the defrosting operation is completed (step 113), flowing directions of refrigerants of the low temperature-side refrigeration cycle and the high temperature-side refrigeration cycle are returned to the normal operation (step 114), and the normal operation in step 102 is carried out.

Fig. 8 shows a control flow of the patent document 3.
An operation of a refrigeration cycle apparatus is started (step 201) and if a normal operation is carried out (step 202), it is determined whether the operation should be shifted to a defrosting operation (step 203). If it is determined in step 203 that the operation should be shifted to the defrosting operation, a low temperature-side compressor and a high temperature-side compressor are once stopped (step 204), flowing directions of refrigerants of a low temperature-side refrigeration cycle and a high temperature-side refrigeration cycle are reversed (step 205).
A timer is reset (step 206) and the defrosting operation is carried out only in the low temperature-side refrigeration cycle (step 207). Time of the defrosting operation only in the low temperature-side refrigeration cycle is counted (step 209), and the defrosting operation only in the low temperature-side refrigeration cycle is continued until the time reaches predetermined time Tms2. If it is determined that the defrosting operation is completed during the defrosting operation only in the low temperature-side refrigeration cycle (step 208), the flowing direction of the refrigerant in the low temperature-side refrigeration cycle is returned to a normal operation (step 213), and the normal operation in step 202 is carried out.
If the time of the defrosting operation only in the low temperature-side refrigeration cycle reaches the predetermined time Tms2, a defrosting operation in the high temperature-side refrigeration cycle is also started in addition to the defrosting operation in the low temperature-side refrigeration cycle (step 211). Even after the predetermined time is elapsed, if an inlet temperature of a low temperature-side evaporator does not exceed a predetermined temperature, the high temperature-side refrigeration cycle is also operated and the defrosting operation is continued.
If it is determined that that the defrosting operation is completed (step 212), the flowing directions of refrigerants in the low temperature-side refrigeration cycle and the high temperature-side refrigeration cycle are returned to the normal operation (step 213), and the normal operation in step 202 is carried out.

### [prior Art Documents]

### [Patent Document]

[Patent Document 1] Japanese Patent Application Laid-open No.2010-196950
[Patent Document 2] Japanese Patent Application Laid-open No.2000-105029
[Patent Document 3] Japanese Patent Application Laid-open No.2011-127878

### [Summary of the Invention]

### [Problem to be Solved by the Invention]

According to the technique described in the patent document 2, during the defrosting operation, the refrigerant regular routes of both the high temperature-side refrigeration cycle and the low temperature-side refrigeration cycle are reversed, and a high temperature discharged refrigerant in the compressor of the low temperature-side refrigeration cycle is supplied directly to the low temperature-side evaporator. Therefore, this technique is effective for thawing frost of the evaporator.
However, since the refrigerant-heating medium heat exchanger of the high temperature-side refrigeration cycle functions as the evaporator, a heating medium in the refrigerant-heating medium heat exchanger is cooled, and there is a problem that the cooled heating medium is supplied to a user of a room-heating, Even if circulation of the heating medium is stopped during the defrosting operation, heating medium itself is frozen and expanded in some cases.

According to the technique described in the patent document 3, under an operation condition that frost is not easily thawed such as a condition that an amount of frost attached to the low temperature-side evaporator is large, it becomes necessary to carry out the defrosting operation in a state where the refrigerant regular route of the high temperature-side refrigeration, cycle is reversed. Hence, like the patent document 2, there is a problem that a cooled heating medium is supplied to a user of a room-heating, or a heating medium itself is frozen.

To solve the problem, it is possible to employ such a method that a first on-off valve is disposed in the high temperature-side refrigeration cycle in series with a refrigerant-heating medium heat exchanger, a bypass circuit which bypasses the refrigerant-heating medium heat exchanger and the first on-off valve is provided, a second on-off valve is mounted on the bypass circuit, and during a defrosting operation, the first on-off valve is closed and the second on-off valve is opened so that a low temperature high temperature-side refrigerant does not pass through the refrigerant-heating medium heat exchanger. However, since the bypass circuit and the second on-off valve are disposed, there is a problem that the high temperature-side refrigeration cycle becomes complicated and a cost of parts is increased.

The present invention has been accomplished to solve the conventional problem, and it is an object of the invention to provide a cascade refrigeration cycle apparatus capable of shortening defrosting time and having high operation efficiency.

### [Means for Solving the Problem]

To solve the conventional problem, the present invention provides a refrigeration cycle apparatus comprising: a low temperature-side refrigeration cycle which is formed by annularly and sequentially connecting, to one another, a low temperature-side compressor, a cascade heat exchanger, a low temperature-side decompressor and a low temperature-side evaporator, and through which a low temperature-side refrigerant is circulated;
a high temperature-side refrigeration cycle which is formed by annularly and sequentially connecting, to one another, a high temperature-side compressor, a refrigerant-heating medium heat exchanger, a high temperature-side decompressor and the cascade heat exchanger, through which a high temperature-side refrigerant is circulated, and which heat exchange is carried out between the low temperature-side refrigerant and the high temperature-side refrigerant in the cascade heat exchanger; defrosting detecting means for detecting a frost-formed state of the low temperature-side evaporator; and a controller which determines whether a normal operation should be shifted to a defrosting operation for thawing frost of the low temperature-side evaporator, and whether the defrosting operation should be shifted to the normal operation, characterized in that when the controller determines that the normal operation should be shifted to the defrosting operation by detection of the defrosting detecting means, the controller continues an operation of the low temperature-side compressor, stops an operation of the high temperature-side compressor, and shifts the normal operation to the defrosting operation.
According to this configuration, since the defrosting operation is carried out without stopping the compressor of the low temperature-side refrigeration cycle and without reversing the flowing direction of a refrigerant, a cooled water medium is not supplied to a user of a room-heating and the water medium is not frozen.
In addition, before an operation is shifted to the defrosting operation, the compressor of the high temperature-side refrigeration cycle is stopped, a condensation temperature (high pressure) of the low temperature-side refrigeration cycle is made to rise for predetermined time in a state only the low temperature-side refrigeration cycle is operated, heat is accumulated from the compressor to the cascade heat exchanger of the low temperature-side refrigeration cycle and then, the defrosting operation of the low temperature-side evaporator is carried out. Therefore, it is possible to shorten the defrosting time, and to enhance the operation efficiency of the refrigeration cycle.

### [Effect of the Invention]

According to the present invention, it is possible to provide a cascade refrigeration cycle apparatus capable of shortening defrosting time and having high operation efficiency.

### [Brief Description of the Drawings]

Fig. 1 is a block diagram of a refrigeration cycle apparatus according to a first embodiment of the present invention;
Fig. 2 is a control flowchart of the refrigeration cycle apparatus according to the first embodiment of the invention;
Fig. 3 is a control flowchart of a refrigeration cycle apparatus according to a second embodiment of the invention;
Fig. 4 is a control flowchart of a refrigeration cycle apparatus according to a third embodiment of the invention;
Fig. 5 is a control flowchart of a refrigeration cycle apparatus according to a fourth embodiment of the invention;
Fig. 6 is a control flowchart of a refrigeration cycle apparatus according to a fifth embodiment of the invention;

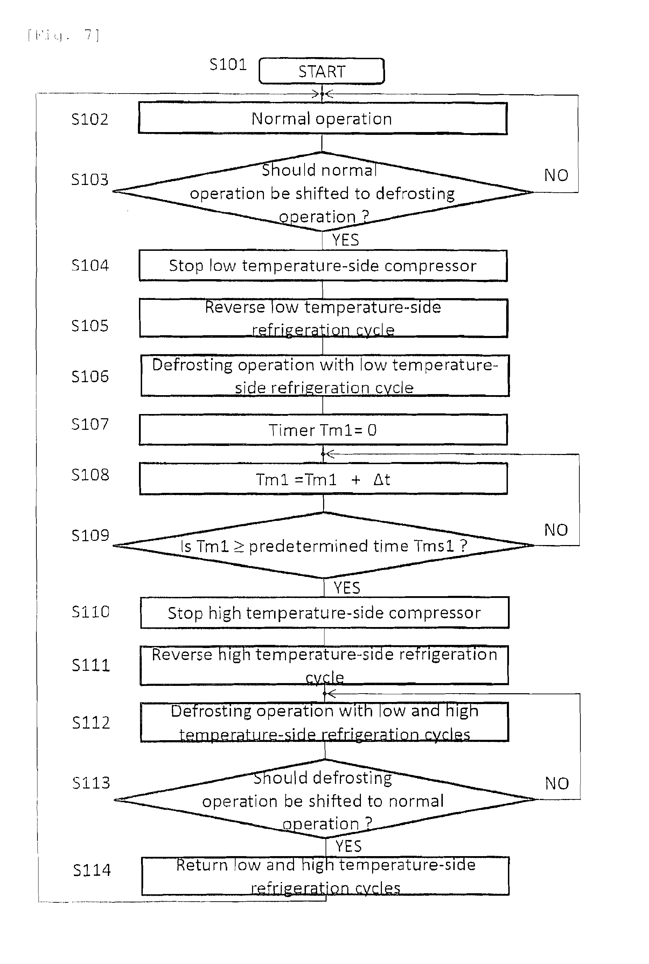

Fig. 7 is a control flowchart of a conventional refrigeration cycle apparatus; and

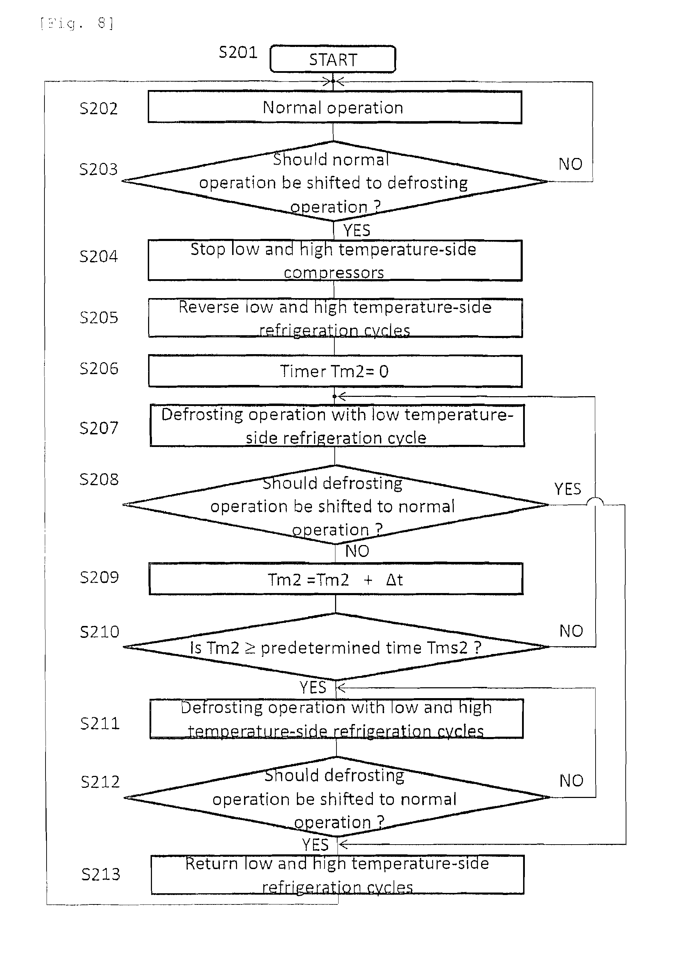

Fig. 8 is a control flowchart of another conventional refrigeration cycle apparatus.

### [Explanation of Symbols]

- 100: refrigeration cycle apparatus
- 110: low temperature-side refrigeration cycle
- 111: low temperature-side compressor
- 112: cascade heat exchanger
- 113: low temperature-side decompressor
- 114: air heat exchanger (low temperature-side evaporator)
- 120: high temperature-side refrigeration cycle
- 121: high temperature-side compressor
- 122: refrigerant-heating medium heat exchanger
- 123: high temperature-side decompressor
- 130: heating medium cycle
- 131: heating medium circulation pump (heating medium circulating means)
- 140: controller

### [Mode for Carrying out the Invention]

A first aspect of the present invention provides a refrigeration cycle apparatus including: a low temperature-side refrigeration cycle which is formed by annularly and sequentially connecting, to one another, a low temperature-side compressor, a cascade heat exchanger, a low temperature-side decompressor and a low temperature-side evaporator, and through which a low temperature-side refrigerant is circulated;
a high temperature-side refrigeration cycle which is formed by annularly and sequentially connecting, to one another, a high temperature-side compressor, a refrigerant-heating medium heat exchanger, a high temperature-side decompressor and the cascade heat exchanger, through which a high temperature-side refrigerant is circulated, and which heat exchange is carried out between the low temperature-side refrigerant and the high temperature-side refrigerant in the cascade heat exchanger; defrosting detecting means for detecting a frost-formed state of the low temperature-side evaporator; and a controller which determines whether a normal operation should be shifted to a defrosting operation for thawing frost of the low temperature-side evaporator, and whether the defrosting operation should be shifted to the normal operation, characterized in that when the controller determines that the normal operation should be shifted to the defrosting operation by detection of the defrosting detecting means, the controller continues an operation of the low temperature-side compressor, stops an operation of the high temperature-side compressor, and shifts the normal operation to the defrosting operation.
According to this configuration, since the defrosting operation is carried out without reversing the flowing direction of the refrigerant of the high temperature-side refrigeration cycle, a cooled heating medium is not supplied to a user of a room-heating, and a heating medium is not frozen.
Further, before the defrosting operation is carried out, the compressor of the high temperature-side refrigeration cycle is stopped and only the low temperature-side refrigeration cycle is operated for predetermined time. Hence, in the cascade heat exchanger, the low temperature-side refrigerant can not dissipate condensation heat, a condensation temperature (low temperature-side high pressure) of the low temperature-side refrigeration cycle rises, and heat is accumulated from the compressor to the cascade heat exchanger of the low temperature-side refrigeration cycle.
Therefore, when an operation is shifted to the defrosting operation, since the accumulated high temperature low temperature-side refrigerant is supplied to the low temperature-side evaporator and the defrosting operation is carried out, it is possible to shorten the defrosting time and to enhance the operation efficiency of the refrigeration cycle.

According to a second aspect of the invention, the refrigeration cycle apparatus further includes low temperature-side high pressure detecting means for detecting pressure of the low temperature-side refrigeration cycle, and when the controller determines that the normal operation should be shifted to the defrosting operation, the controller shifts the normal operation to the defrosting operation after the pressure detected by the low temperature-side high pressure detecting means exceeds predetermined high pressure.
According to this configuration, the compressor of the high temperature-side refrigeration cycle is stopped before the defrosting operation is carried out, and only the low temperature-side refrigeration cycle is operated. In this state, low temperature-side high pressure is made to rise to a predetermined value which is equal to or lower than a high pressure upper limit value of the low temperature-side refrigeration cycle, and heat is accumulated from the compressor to the cascade heat exchanger of the low temperature-side refrigeration cycle and then, the defrosting operation of the low temperature-side evaporator is carried out.
Hence, under whatever condition, it is possible to reliably avoid an abnormal situation in which low temperature-side high pressure exceeds an upper limit of the high pressure of the low temperature-side refrigeration cycle.

According to a third aspect of the invention, the refrigeration cycle apparatus further includes cascade heat exchanger temperature detecting means for detecting a temperature of the cascade heat exchanger, and when the controller determines that the normal operation should be shifted to the defrosting operation, the controller shifts the normal operation to the defrosting operation after the temperature detected by the cascade heat exchanger temperature detecting means exceeds predetermined temperature.
According to this configuration, the compressor of the high temperature-side refrigeration cycle is stopped before the defrosting operation is carried out, a temperature detected by a cascade heat exchanger temperature detector is made to rise to the predetermined temperature in a state where only the low temperature-side refrigeration cycle is operated, heat is accumulated from the compressor to the cascade heat exchanger of the low temperature-side refrigeration cycle and then, the defrosting operation of the low temperature-side evaporator is carried out. The temperature detected by the cascade heat exchanger temperature detector is close to a condensation temperature of the low temperature-side refrigeration cycle, and it is possible to estimate low temperature-side high pressure from the detected temperature. The predetermined temperature is set to a value which is equal to or lower than a temperature obtained by converting the high pressure upper limit value of the low temperature-side refrigeration cycle into a saturation temperature.
Hence, under whatever condition, it is possible to reliably avoid an abnormal situation in which low temperature-side high pressure an upper limit of the high pressure of the low temperature-side refrigeration cycle. Since the temperature detector which is more inexpensive than a pressure detector is utilized, a cost of parts can be reduced.

According to a fourth aspect of the invention, when the controller determines that the normal operation should be shifted to the defrosting operation, the controller reduces a flow rate of the low temperature-side refrigerant which flows through the low temperature-side decompressor.
According to this configuration, the compressor of the high temperature-side refrigeration cycle is stopped before the defrosting operation is carried out, and in a state where only the low temperature-side refrigeration cycle is operated, the flow rate of the low temperature-side refrigerant flowing through the low temperature-side decompressor is reduced, and a rising speed of the condensation temperature (low temperature-side high pressure) of the low temperature-side refrigeration cycle is increased.
Hence, since time required for accumulating heat from the compressor to the cascade heat exchanger of the low temperature-side refrigeration cycle is shortened, the defrosting time can be shortened.

According to a fifth aspect of the invention, the refrigeration cycle apparatus further includes a heating medium cycle connecting the refrigerant-heating medium heat exchanger and heating medium circulating means, a heating medium circulates through the heating medium cycle, and in the refrigerant-heating medium heat exchanger, heat exchange is carried out between the high temperature-side refrigerant and the heating medium, and when the controller determines that the normal operation should be shifted to the defrosting operation, the controller reduces a flow rate of the heating medium by the heating medium circulating means.
According to this configuration, since a circulation amount of the heating medium is small in the refrigerant-heating medium heat exchanger, it is possible to restrain a temperature of the high temperature-side refrigeration cycle from lowering, and to precisely measure a heating medium inlet temperature entering the refrigerant-heating medium heat exchanger. The heating medium inlet temperature is a value representing a load of the heating medium cycle, and based on this temperature, it is possible to determine operation frequency of the high temperature-side compressor after the defrosting operation is shifted to the normal operation.
Hence, since it is possible to monitor the load of the heating medium cycle even during the defrosting operation, when defrosting detecting means determines that the defrosting operation is shifted to the normal operation and the high temperature-side compressor is started, a target operation frequency can previously appropriately be set, high pressure in the high temperature-side refrigeration cycle can swiftly rise, and the operation can be returned to the normal operation more quickly. Further, energy consumption of the heating medium circulating means during the defrosting operation can be reduced.

According to a sixth aspect of the invention, when the controller determines that the normal operation should be shifted to the defrosting operation, the controller stops a heating medium circulation pump.
According to this configuration, in the refrigerant-heating medium heat exchanger in which heat exchange is carried out between condensation heat of a high temperature-side refrigerant in the high temperature-side refrigeration cycle and a heating medium which circulates through the heating medium cycle, a heating medium does not flow after the heating medium circulating means stops. Therefore, a temperature of the high temperature-side refrigerant is not lowered and is maintained.
Hence, after the defrosting detecting means determines that the defrosting operation is shifted to the normal operation and the high temperature-side compressor is started, high pressure in the high temperature-side refrigeration cycle can swiftly rise and the defrosting operation can be returned to the normal operation more quickly, and energy consumption of the heating medium circulating means during the defrosting operation can be reduced.

According to a seventh aspect of the invention, the refrigeration cycle apparatus further includes a heating medium cycle connecting the refrigerant-heating medium heat exchanger and heating medium circulating means, a heating medium circulates through the heating medium cycle, and in the refrigerant-heating medium heat exchanger, heat exchange is carried out between the high temperature-side refrigerant and the heating medium, and when the controller determines that the defrosting operation should be shifted to the normal operation, the controller increases a flow rate of the heating medium by the heating medium circulating means.
According to this configuration, the heating medium prevents a temperature of the refrigerant-heating medium heat exchanger from lowering as compared with a case in which at the same time as shifting from the defrosting operation to the normal operation, a flow rate of a heating medium in the heating medium cycle is returned to a flow rate of the normal operation. It is possible to swiftly rise the high pressure in the high temperature-side refrigeration cycle, and the operation can be returned to the normal operation more quickly.

An eighth aspect of the invention provides a hot water producing apparatus using the refrigeration cycle apparatus, the heating medium is water or antifreeze liquid, and the water or the antifreeze liquid heated by the refrigerant-heating medium heat exchanger is utilized for at least one of hot-water supply and room-heating.
According to this configuration, the refrigerant-heating medium heat exchanger may be not only a refrigerant-air heat exchanger but also a refrigerant-heating medium heat exchanger, and flexibility of usage of the heating medium can be enhanced.

Embodiments of the present invention will be described with reference to the drawings. The invention is not limited to the embodiments.

### (First Embodiment)

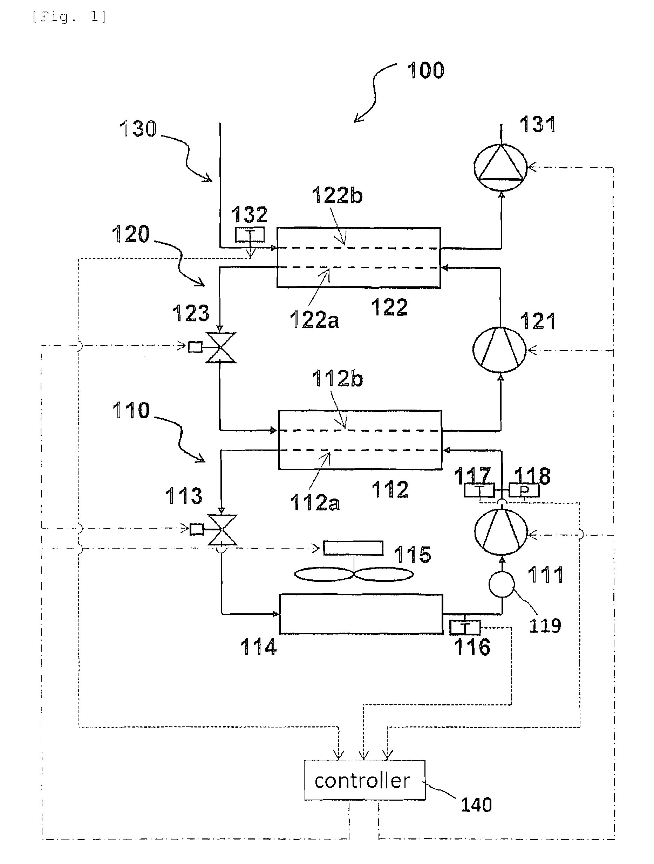

Fig. 1 is a block diagram of a cascade refrigeration cycle apparatus 100 according to a first embodiment of the present invention. The cascade refrigeration cycle apparatus 100 includes a low temperature-side refrigeration cycle 110, a high temperature-side refrigeration cycle 120, a heating medium cycle 130 and a controller 140.

The low temperature-side refrigeration cycle 110 is formed by annularly connecting, to one another, a low temperature-side compressor 111 which sucks and compresses a gaseous low temperature-side refrigerant and discharges a high temperature and high pressure low temperature-side refrigerant, a cascade heat exchanger 112 which heat-exchanges between a low temperature-side refrigerant and a high temperature-side refrigerant, a low temperature-side decompressor 113 which adjusts a flow rate of the low temperature-side refrigerant, and an air heat exchanger (low temperature-side evaporator) 114 which extracts heat from outdoor air. A low temperature-side refrigerant circulates through the low temperature-side refrigeration cycle 110. An air heat exchanger fan 115 forcibly introduces outdoor air into the air heat exchanger 114. In the cascade heat exchanger 112, the low temperature-side refrigerant flows through a flow path 112a.

The high temperature-side refrigeration cycle 120 is formed by annularly connecting, to one another, a high temperature-side compressor 121 which sucks and compresses a gaseous high temperature-side refrigerant and discharges high temperature and high pressure high temperature-side refrigerant, a refrigerant-heating medium heat exchanger 122 which heat-exchanges between a high temperature-side refrigerant and a water heating medium, a high temperature-side decompressor 123 which adjusts a flow rate of a high temperature-side refrigerant, and the cascade heat exchanger 112. A high temperature-side refrigerant circulates through the high temperature-side refrigeration cycle 120.
In the cascade heat exchanger 112, the high temperature-side refrigerant flows through a flow path 112b. In the refrigerant-heating medium heat exchanger 122, the high temperature-side refrigerant flows through the flow path 122a.

The low temperature-side decompressor 113 and the high temperature-side decompressor 123 are mechanisms which decompress and expand a low temperature-side refrigerant and a high temperature-side refrigerant, respectively, and electronic expansion valves whose opening degrees can be controlled are used as these decompressor 113 and 123.
The heating medium cycle 130 is composed of the refrigerant-heating medium heat exchanger 122 and a heating medium circulation pump 131. A heating medium circulates through the heating medium cycle 130. In the refrigerant-heating medium heat exchanger 122, a heating medium flows through the flow path 122b.

A low temperature-side refrigerant in the low temperature-side refrigeration cycle 110 and a high temperature-side refrigerant in the high temperature-side refrigeration cycle 120 are independent from each other and they are not mixed with each other, but heat exchange can be carried out therebetween through the cascade heat exchanger 112. A double pipe-type heat exchanger or a plate-type heat exchanger is used as the cascade heat exchanger 112.
A high temperature-side refrigerant in the high temperature-side refrigeration cycle 120 and a heating medium in the heating medium cycle 130 are independent from each other and they are not mixed with each other, but heat exchange can be carried out therebetween through the refrigerant-heating medium heat exchanger 122. A double pipe-type heat exchanger or a plate-type heat exchanger is used as the refrigerant-heating medium heat exchanger 122.
The heating medium circulation pump 131 is driven by a DC power supply, and includes an impeller. By PWM controlling the number of rotations of the impeller, a circulation amount of a water heating medium in the heating medium cycle 130 can be changed.

In the low temperature-side refrigeration cycle 110, an air heat exchanger outlet temperature detection sensor (defrosting detecting means) 116 which detects an air heat exchanger outlet temperature Teo is disposed in an outlet-side pipe of the air heat exchanger 114. A low temperature-side compressor discharge temperature detection sensor 117 and a low temperature-side compressor discharge pressure detection sensor (low temperature-side high pressure detecting means) 118 are disposed in a discharge-side pipe of the low temperature-side compressor 111. The low temperature-side compressor discharge temperature detection sensor 117 detects a discharge temperature of the low temperature-side compressor 111. The low temperature-side compressor discharge pressure detection sensor 118 detects a discharge pressure of the low temperature-side compressor 111.
A water heating medium return temperature detection sensor (cascade heat exchanger temperature detecting means) 132 is disposed in the heating medium cycle 130. The water heating medium return temperature detection sensor 132 detects a return temperature Twi of water heating medium which flows into the flow path 122b of the refrigerant-heating medium heat exchanger 122.

A control program is incorporated in the controller 140, the controller 140 obtains detection values by means of various detection sensors, and controls operation frequencies of the low temperature-side compressor 111 and the high temperature-side compressor 121, opening degrees of the low temperature-side decompressor 113 and the high temperature-side decompressor 123, the number of rotations of the air heat exchanger fan 115 and the number of rotations of the heating medium circulation pump 131.
The controller 140 determines whether an operation should be shifted to a defrosting operation for thawing frost attached to the air heat exchanger 114. The controller 140 compares a defrosting operation start determination temperature Tes which is determined by an outdoor temperature Tod and an air heat exchanger outlet temperature Teo with each other, and if the air heat exchanger outlet temperature Teo becomes equal to or lower than the defrosting operation start determination temperature Tes, the controller 140 determines that the operation should be shifted to the defrosting operation. The defrosting operation start determination temperature Tes and the outdoor temperature Tod are proportional to each other. For example when Tod is 2°C, Tes is -12°C.

Next, an operation of the cascade refrigeration cycle apparatus 100 will be described.

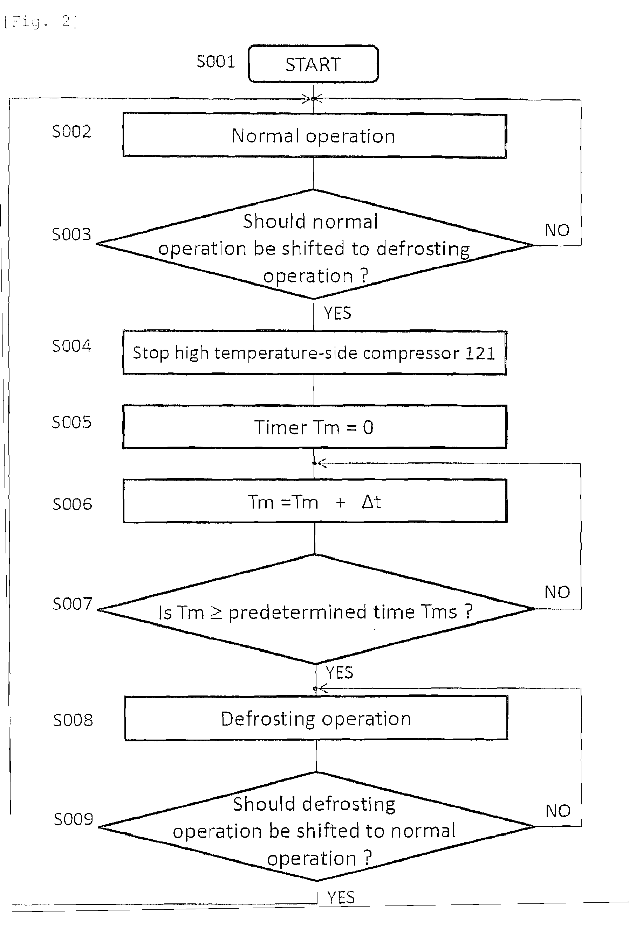

Fig. 2 is a flowchart for explaining a control operation of the controller in the first embodiment of the invention.

The operation of the refrigeration cycle apparatus is started (step 001), and if the normal operation is carried out (step 002), the controller 140 of the cascade refrigeration cycle apparatus 100 always monitors the air heat exchanger outlet temperature Teo for determining whether a defrosting start condition is satisfied (step 003). When the controller 140 does not determine that the operation should be shifted to the defrosting operation, the normal operation is continued.
The controller 140 during the normal operation estimates a load of a water medium from the outside air temperature Tod and the water heating medium return temperature Twi, and appropriately sets operation frequencies of the high temperature-side compressor 121 and the low temperature-side compressor 111. Further, the controller 140 adjusts opening degrees of the low temperature-side decompressor 113 and the high temperature-side decompressor 123 such that efficiencies of the low temperature-side refrigeration cycle 110 and the high temperature-side refrigeration cycle 120 become the highest.

In step 003, if it is determined that the operation should be shifted to the defrosting operation, the high temperature-side compressor 121 is first stopped (step 004). At this time, the low temperature-side compressor 111 still continues its operation.
Next, a timer Tm which manages time elapsed until an operation is shifted to defrosting time control of the low temperature-side refrigeration cycle 110 (step 008) after the high temperature-side compressor 121 is stopped in step 004 is started (step 005). The timer Tm is periodically (e.g., every time Δt) clouted up (step 006).
While the timer Tm is counted up after the high temperature-side compressor 121 is stopped in step 004, the high temperature-side refrigerant of the flow path 112b in the cascade heat exchanger 112 does not flow almost at all, and condensation heat of the low temperature-side refrigerants flowing through the flow path 112a in the cascade heat exchanger 112 can not be absorbed. Therefore, a temperature of the low temperature-side refrigerant flowing through the flow path 112a in the cascade heat exchanger 112 rises, and heat is accumulated from the low temperature-side compressor 111 to the cascade heat exchanger 112.

If time counted by the timer Tm becomes equal to or longer than predetermined time Tms (step 007), the operation is shifted to the defrosting operation for thawing frost attached to the air heat exchanger 114 (step 008) . If the operation is shifted to the defrosting operation, the air heat exchanger fan 115 is first stopped, and a valve of the low temperature-side decompressor 113 is fully or substantially fully opened. At this time, if a valve opening degree of the low temperature-side decompressor 113 before step 007 is small and a difference of the opening degree until the low temperature-side decompressor 113 is fully opened is large, the opening degree of the low temperature-side decompressor 113 may be opened in several stages.
By fully opening the valve opening degree of the low temperature-side decompressor 113, energy loss generated until the low temperature-side refrigerant discharged from the low temperature-side compressor 111 passes through the flow path 112a in the cascade heat exchanger 112 and the low temperature-side decompressor 113 and the low temperature-side refrigerant reaches the air heat exchanger 114 can be suppressed to the minimum level.
Concerning heat accumulation from the low temperature-side compressor 111 to the cascade heat exchanger 112 in step 004 to step 007 before the defrosting operation which is a feature of the embodiment, much heat is supplied to the air heat exchanger 114 when the defrosting operation is started as compared with a case where heat is not accumulated. Therefore, time during which the defrosting operation is carried out is shortened.

In the low temperature-side refrigeration cycle 110, if the defrosting operation of the air heat exchanger 114 is carried out in a state where heat radiation is not carried out in the cascade heat exchanger 112 and the valve opening degree of the low temperature-side decompressor 113 is left fully opened, since there is no evaporation process in the refrigeration cycle, a large amount of liquid refrigerant returns to the low temperature-side compressor 111. Therefore, there is a danger that the low temperature-side compressor 111 sucks a liquid, refrigerant and compresses the refrigerant, and a problem is generated in durability of the low temperature-side compressor 111.
Hence, an accumulator 119 having a sufficient capacity is disposed on the side of an inlet of the low temperature-side compressor 111 so that even if the liquid refrigerant returns, it is possible to handle such a situation.

When the low temperature-side compressor 111 is a high pressure shell-type compressor which is accommodated in an airtight container and in which a discharged refrigerant is discharged into the airtight container, if the above-described defrosting operation is continued, a discharge temperature is gradually reduced and eventually, a discharged refrigerant is condensed immediately after it is discharged into the airtight container and the refrigerant is liquefied. The liquefied refrigerant is mixed with a compressor lubricant accumulated in a lower portion of the airtight container, and there is a danger that the refrigerant is discharged outside of the airtight container.
This situation occurs when a superheat degree of the discharged refrigerant of the compressor is insufficient, and since a compressor lubricant is discharged outside of the airtight container, this leads to a deficiency in lubricant in the compressor, and a serious problem occurs in durability of the low temperature-side compressor 111.
To handle such a situation, after the low temperature-side decompressor 113 is fully opened, the controller 140 which is carrying out the defrosting operation monitors the superheat degree of the discharged refrigerant of the low temperature-side compressor 111. The controller 140 reduces the opening degree of the low temperature-side decompressor 113, lowers the frequency of the low temperature-side compressor 111 so that the superheat degree does not become lower than a predetermined value, e.g., 5 K (5deg).

A superheat degree of a discharged refrigerant of the low temperature-side compressor 111 is obtained from a difference between a discharge temperature detected by the low temperature-side compressor discharge temperature detection sensor 117 and a saturation temperature converted from a discharge pressure detected by the low temperature-side compressor discharge pressure detection sensor 118. A temperature detection sensor may be disposed in a refrigerant flow path 112a in the cascade heat exchanger 112, and a value detected by the temperature sensor may be used as the saturation temperature, and the superheat degree may be calculated instead of discharge pressure.
If thawing of frost of the air heat exchanger 114 is started, the air heat exchanger outlet temperature Teo starts rising. If the air heat exchanger outlet temperature Teo reaches a defrosting completion, determination temperature Tee, the controller 140 determines that frost of the air heat exchanger 114 is completely thawed (step 009), the controller 140 starts the air heat exchanger fan 115 and the high temperature-side compressor 121, and the operation is returned to the normal operation. The defrosting completion determination temperature Tee is preferably 5 to 10°C.

As described above, in the embodiment, when the controller 140 determines that the operation should be shifted to the defrosting operation, only the high temperature-side compressor 121 is stopped and after predetermined time is elapsed, the operation is shifted to the defrosting operation. That is, since the defrosting operation is carried out without reversing the refrigerant regular route of the high temperature-side refrigeration cycle 120, a water heating medium is not cooled and frozen in the refrigerant-heating medium heat exchanger 122.
Before the defrosting operation is carried out, the high temperature-side compressor 121 of the high temperature-side refrigeration cycle 120 is stopped, and only the low temperature-side compressor 111 is operated for predetermined time. Hence, in the cascade heat exchanger 112, a condensation temperature (low temperature-side high pressure) of the low temperature-side refrigeration cycle 110 rises, and heat is accumulated from the low temperature-side compressor 111 to the cascade heat exchanger 112 of the low temperature-side refrigeration cycle 110.
Hence, when the operation is shifted to the defrosting operation, since the accumulated high temperature low temperature-side refrigerant is supplied to the air heat exchanger 114 and the defrosting operation is carried out, the defrosting time can be shortened, and it is possible to enhance the operation efficiency of the cascade refrigeration cycle apparatus 100.

### (Second Embodiment)

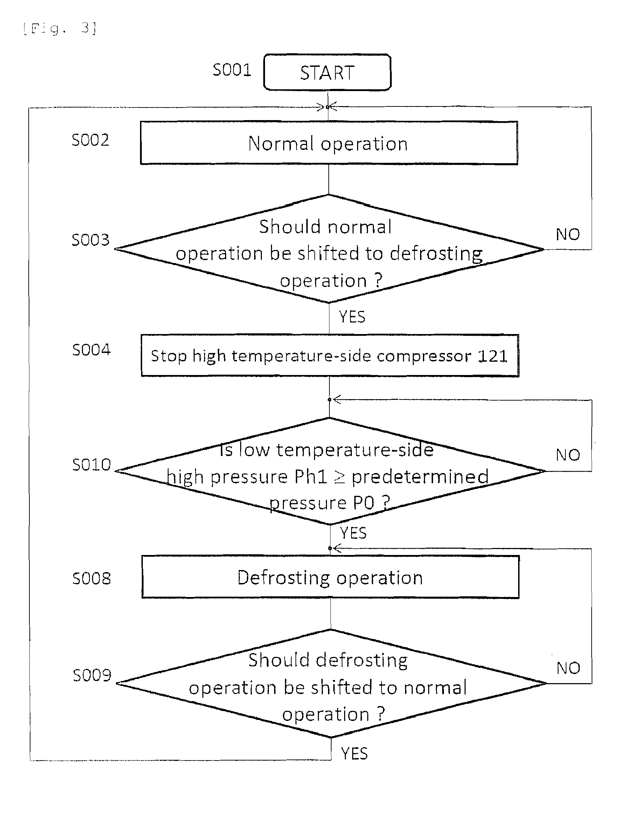

Fig. 3 is a flowchart for explaining a control operation of a controller in a second embodiment of the invention. In the second embodiment, since a configuration of the cascade refrigeration cycle apparatus 100 is the same as that shown in Fig. 1, explanation of constituent elements thereof will be omitted.
As compared with Fig. 2, Fig. 3 does not include steps 005 to 007, but includes step 010 instead. Since other processing procedures are the same as those shown in Fig. 2, an operation of step 010 will mainly be described in the second embodiment.

If the controller 140 determines in step 003 that the operation should be shifted to the defrosting operation, the controller 140 stops the high temperature-side compressor 121 in next step 004. Then, like the first embodiment, a temperature of a low temperature-side refrigerant flowing through the flow path 112a in the cascade heat exchanger 112 abruptly rises, and heat is accumulated from the low temperature-side compressor 111 to the cascade heat exchanger 112.
However, if the operation is continued in this state, the high pressure (low temperature-side high pressure) in the low temperature-side refrigeration cycle 110 keeps rising, and there is a danger that the pressure exceeds upper limit pressure which is set in the low temperature-side refrigeration cycle 110.
Hence, in step 010, the controller 140 monitors discharge pressure Ph1 detected by the low temperature-side discharge pressure detection sensor 118. If the discharge pressure Ph1 becomes equal to or higher than predetermined pressure P0, the operation is shifted to the defrosting operation shown in step 008. This predetermined pressure P0 is a value equal to or lower than the upper limit pressure which is set in the low temperature-side refrigeration cycle 110.

If the defrosting operation is started, as described in the first embodiment, since the controller 140 fully or substantially fully opens the low temperature-side decompressor 113, the low temperature-side high pressure is lowered at once, and the pressure does not exceeds the upper limit pressure.
Although the discharge pressure detected by the low temperature-side discharge pressure detection sensor 118 is used for detecting the low temperature-side high pressure in this embodiment, the present invention is not limited to this. For example, a detection value of a pressure detection sensor disposed between the cascade heat exchanger 112 and the low temperature-side decompressor 113 may be used.

As described above, in this embodiment, the high temperature-side compressor 121 is stopped before the defrosting operation is carried out. In a state where only the low temperature-side refrigeration cycle 110 is operated, the low temperature-side high pressure is made to rise to a predetermined value, heat is accumulated from the low temperature-side compressor 111 to the cascade heat exchanger 112 and then, the defrosting operation of the air heat exchanger 114 is carried out.
Hence, when the operation is shifted to defrosting operation, since a high temperature low temperature-side refrigerant is supplied to the air heat exchanger 114 and the defrosting operation is carried out, defrosting time can be shortened. Further, under whatever conditions, it is possible to reliably avoid an abnormal situation in which the low temperature-side high pressure exceeds the upper limit value of the high pressure in the low temperature-side refrigeration cycle.

### (Third Embodiment)

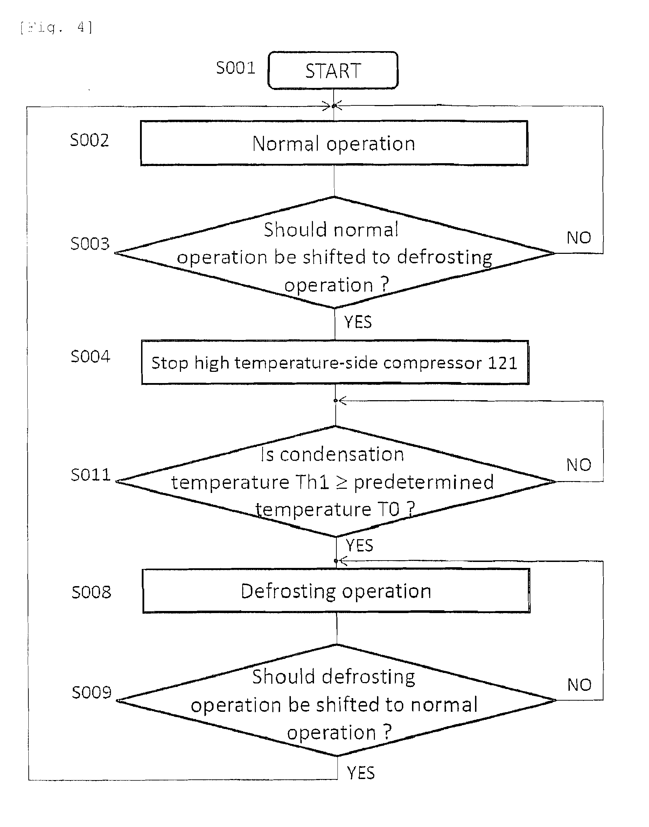

Fig. 4 is a flowchart for explaining a control operation of a controller in a third embodiment of the invention. In the third embodiment, since a configuration of the cascade refrigeration cycle apparatus 100 is the same as that shown in Fig. 1, explanation of constituent elements thereof will be omitted.
As compared with Fig. 3 (second embodiment), Fig. 4 does not include step 010, but includes step 011 instead. Since other processing procedures are the same as those shown in Fig. 3, an operation of step 011 will mainly be described in the third embodiment.

If the controller 140 determines in step 003 that the operation should be shifted to the defrosting operation, the controller 140 stops the high temperature-side compressor 121 in next step 004. Then, like the first embodiment, a temperature of a low temperature-side refrigerant flowing through the flow path 112a in the cascade heat exchanger 112 abruptly rises, and heat is accumulated from the low temperature-side compressor 111 to the cascade heat exchanger 112.
However, if the operation is continued in this state, the high pressure (low temperature-side high pressure) in the low temperature-side refrigeration cycle 110 keeps rising, and there is a danger that the pressure exceeds upper limit pressure which is set in the low temperature-side refrigeration cycle 110.
Hence, in step 011, the controller 140 monitors a detection temperature Th1 of a cascade heat exchanger temperature detection sensor (not shown) disposed in the flow path 112a of the cascade heat exchanger 112. The detection temperature Th1 is a value close to a condensation temperature of the low temperature-side refrigeration cycle 110, and it is possible to estimate low temperature-side high pressure from this detection temperature Th1.

If the detection temperature Th1 of the cascade heat exchanger temperature detection sensor becomes equal to or higher than a predetermined temperature T0, the operation is shifted to the defrosting operation in step 008. The predetermined temperature T0 is set equal to or lower than a saturation temperature converted from the upper limit pressure which is set in the low temperature-side refrigeration cycle 110.
If the defrosting operation is started, as described in the first embodiment, since the controller 140 fully or substantially fully opens the low temperature-side decompressor 113, the low temperature-side high pressure is lowered at once, and the pressure does not exceeds the upper limit pressure.

As described above, in this embodiment, the high temperature-side compressor 121 is stopped before the defrosting operation is carried out. In a state where only the low temperature-side refrigeration cycle 110 is operated, the temperature detected by the cascade heat exchanger temperature detection sensor is made to rise to a predetermined value T0, heat is accumulated from the low temperature-side compressor 111 to cascade heat exchanger 112 and then, defrosting operation of the air heat exchanger 114 is carried out.
Hence, when the operation is shifted to the defrosting operation, since a high temperature low temperature-side refrigerant is supplied to the air heat exchanger 114 and the defrosting operation is carried out, defrosting time can be shortened. Further, under whatever conditions, it is possible to reliably avoid an abnormal situation in which the low temperature-side high pressure exceeds the upper limit value of the high pressure in the low temperature-side refrigeration cycle. Further, since the temperature detection sensor which is more inexpensive than a pressure detection sensor is utilized, a cost of parts can be reduced.

### (Fourth Embodiment)

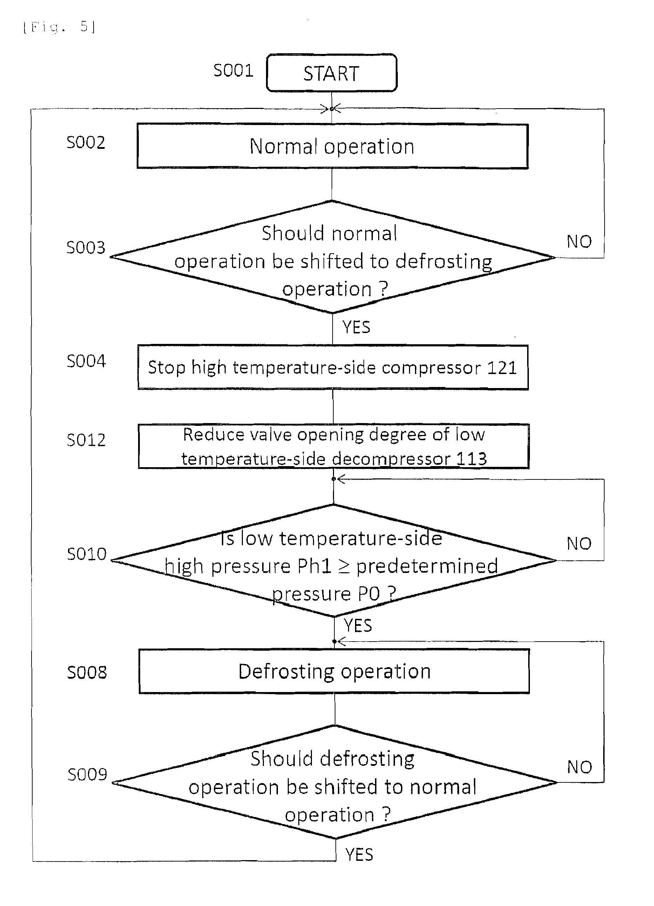

Fig. 5 is a flowchart for explaining a control operation of a controller in a fourth embodiment of the invention. In the fourth embodiment, since a configuration of the cascade refrigeration cycle apparatus 100 is the same as that shown in Fig. 1, explanation of constituent elements thereof will be omitted.
As compared with Fig. 3 (second embodiment), Fig. 5 includes step 012 between steps 004 and 010. Since other processing procedures are the same as those shown in Fig. 3, an operation of step 012 will mainly be described in the fourth embodiment.

If the controller 140 determines in step 003 that the operation should be shifted to the defrosting operation, the controller 140 stops the high temperature-side compressor 121 in next step 004. In step 012, the controller 140 reduces an opening degree of the low temperature-side decompressor 113.
Then, like the first to third embodiments, pressure and a temperature of the low temperature-side refrigerant flowing through the flow path 112a in the cascade heat exchanger 112 rise, but since the opening degree of the low temperature-side decompressor 113 is reduced, the rising speeds of the pressure and the temperature remarkably increase. That is, time required for accumulating heat from the low temperature-side compressor 111 to the cascade heat exchanger 112 becomes shorter than the first to third embodiments.

Setting of the opening degree of the low temperature-side decompressor 113 in step 012 may be any of relative value control which reduces an opening degree before step 004 by a predetermined opening degree and absolute value control which employs an opening degree which is predetermined by an operation condition such as an outside air temperature.
A discharge pressure Ph1 detected by the low temperature-side discharge pressure detection sensor 118 becomes equal to or higher than predetermined pressure P0 and after an operation is shifted to the defrosting operation in step 008, the operation procedure is the same as that of the second embodiment.

As described above, in the embodiment, the high temperature-side compressor 121 is stopped before the defrosting operation is carried out, and only the low temperature-side refrigeration cycle 110 is operated. In this state, the opening degree of the low temperature-side decompressor 113 is further reduced. The low temperature-side high pressure is made to swiftly rise to the predetermined pressure, heat is accumulated from the low temperature-side compressor 111 to the cascade heat exchanger 112, and the defrosting operation of the air heat exchanger 114 is carried out.
Hence, time required for accumulating heat can be shortened as compared with the first to third embodiments, and the defrosting time can be shortened.

### (Fifth Embodiment)

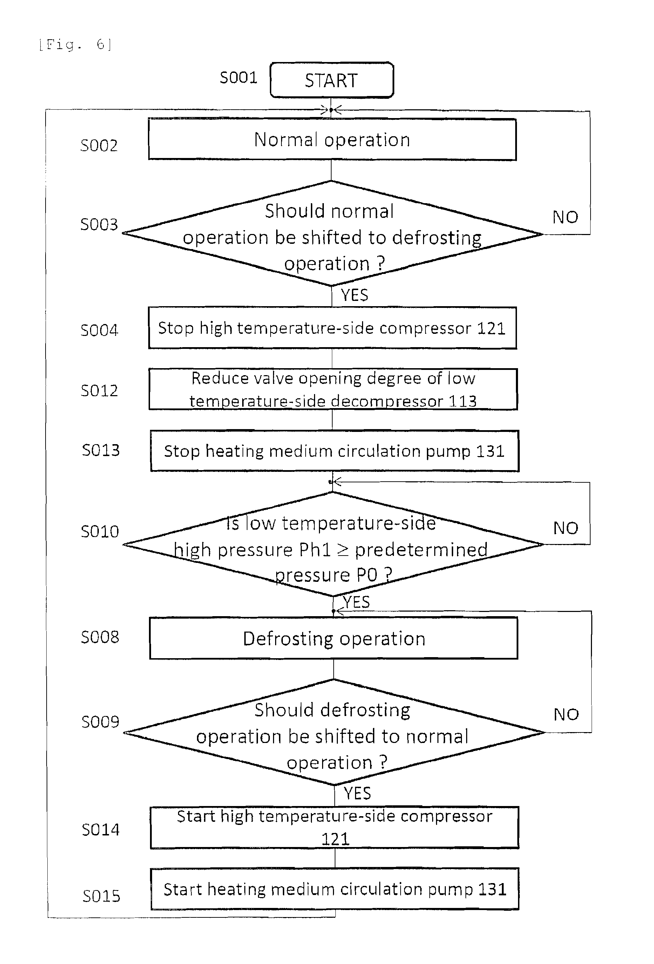

Fig. 6 is a flowchart for explaining a control operation of a controller in a fifth embodiment of the invention. In the fifth embodiment, since a configuration of the cascade refrigeration cycle apparatus 100 is the same as that shown in Fig. 1, explanation of constituent elements thereof will be omitted.
As compared with Fig. 5 (fourth embodiment), Fig. 6 includes step 013 between steps 012 and 010, and also includes steps 014 and 015 after step 009. Since other processing procedures are the same as those shown in Fig. 5, operations of steps 013 and 015 for controlling the heating medium circulation pump 131 in the heating medium cycle 130 will mainly be described in the fifth embodiment.
If the controller 140 determines in step 003 that the operation should be shifted to the defrosting operation, the controller 140 stops the high temperature-side compressor 121 in next step 004. Further, in step 012, the controller 140 reduces an opening degree of the low temperature-side decompressor 113. Then, like the fourth embodiment, pressure and a temperature of the low temperature-side refrigerant flowing through the flow path 112a in the cascade heat exchanger 112 abruptly rise.
At this time, a temperature of the high temperature-side refrigerant in the refrigerant-heating medium heat exchanger 122 is about 65 to 80°C which is the same as a condensation temperature of the high temperature-side refrigerant at the time of the normal operation. A water heating medium return temperature Twi is as low as about 20 to 30°C within less than one hour after the refrigeration cycle apparatus 100 is started, i.e., in a state where a load is not sufficiently warmed.

Therefore, if the circulation of a water heating medium is continued in this state, a high temperature-side refrigerant staying in a flow path 122a of the refrigerant-heating medium heat exchanger 122 is gradually cooled by a low temperature water heating medium which returns to the flow path 122b of the refrigerant-heating medium heat exchanger 122. Since defrosting operation time is generally about 6 to 10 minutes, the temperature of the high temperature-side refrigerant of the refrigerant-heating medium heat exchanger 122 is cooled to a temperature close to the water heating medium return temperature Twi, and the temperature is lowered by 30°C or more depending on circumstances.
If the defrosting operation is shifted to the normal operation in this state, since this temperature again rises to the condensation temperature (about 65 to 80°C) of the high temperature-side refrigerant at the time of the normal operation, it takes time.
Hence, in step 013 which is immediately after step 012 of reducing an opening degree of the low temperature-side decompressor 113, the controller 140 of this embodiment stops the heating medium circulation, pump 131 of the heating medium cycle 130, and prevents a temperature of the high temperature-side refrigerant staying in the flow path 122a of the refrigerant-heating medium heat exchanger 122 from lowering.

Although step 013 of stopping the heating medium circulation pump 131 of the heating medium cycle 130 is placed after step 004 of stopping the high temperature-side compressor 121 and step 012 of reducing the opening degree of the low temperature-side decompressor 113 in this embodiment, the same effect can be obtained even if steps 004 and 012 are executed at the time.

Next, if the discharge pressure Ph1 detected by the low temperature-side discharge pressure detection sensor 118 becomes equal to or higher than the predetermined pressure P0 (step 010), the operation is shifted to the defrosting operation of step 008. If the air heat exchanger outlet temperature Teo reaches the defrosting completion determination temperature Tee through the defrosting operation which takes 6 to 10 minutes, it is determined that frost of the air heat exchanger 114 is completely thawed (step 009), the high temperature-side compressor 121 is started (step 014).
The operation of the stopped heating medium circulation pump 131 is started after the high temperature-side compressor 121 is started (step 015). This is because that if the high temperature-side compressor 121 is started (step 014) at the same time as the heating medium circulation pump 131 is started, a water heating medium which is cooled in the heating medium cycle 130 during the defrosting operation flows into the flow path 122b of the refrigerant-heating medium heat exchanger 122, and it is possible to avoid a case where it takes time before a temperature of a high temperature-side refrigerant of the refrigerant-heating medium heat exchanger 122 rises after the high temperature-side compressor 121 is started.
After the high temperature-side compressor 121 is started (step 014), the heating medium circulation pump 131 is started (step 015). This timing may be after preset predetermined time is elapsed, or may be after a temperature detection sensor (not shown) disposed in the flow path 122a of the refrigerant-heating medium heat exchanger 122 becomes equal to or higher than a predetermined temperature.

As described above, in this embodiment, if the controller 140 determines that the normal operation should be shifted to the defrosting operation, the heating medium circulation pump 131 is stopped in the heating medium cycle 130 after the high temperature-side compressor 121 is stopped. Hence, in the refrigerant-heating medium heat exchanger 122, heat exchange can not continuously be carried out between the high temperature-side refrigerant and the water heating medium, and a temperature of the high temperature-side refrigerant is maintained.
Further, if the defrosting operation is completed, the heating medium circulation pump 131 is started after the high temperature-side compressor 121 is started. Therefore, until the heating medium circulation pump 131 is started, a high temperature-side refrigerant of the refrigerant-heating medium heat exchanger 122 is not cooled by a water heating medium, and a temperature of the high temperature-side refrigerant swiftly rises. Hence, after the defrosting operation is completed, high pressure in the high temperature-side refrigeration cycle 120 swiftly rises, the defrosting operation can be returned to the normal operation more quickly, and energy consumption of the heating medium circulation pump 131 during the defrosting operation can be reduced.

Although the heating medium circulation pump 131 in the heating medium cycle 130 is stopped in step 013 in this embodiment, the number of rotations of the heating medium circulation pump 131 may be reduced to 5 to 20% of the normal operation for example.
In this case, an effect for lowering a temperature of the high temperature-side refrigerant which stays in the flow path 122a of the refrigerant-heating medium heat exchanger 122 and an effect for reducing the energy consumption of the heating medium circulation pump 131 during the defrosting operation are lowered. However, even during the defrosting operation, it is possible to precisely measure the water heating medium return temperature Twi flowing into the flow path 122b of the refrigerant-heating medium heat exchanger 122.
The water heating medium return temperature Twi is a value representing a load of the heating medium cycle 130. Based on the water heating medium return temperature Twi, it is possible to precisely determine operation frequency of the high temperature-side compressor 121 after the defrosting operation is shifted to the normal operation. That is, after the defrosting operation is completed, the defrosting operation can be shifted to the normal operation with operation frequency which is suitable for a load of the heating medium cycle 130.

### [Industrial Applicability]

As described above, the refrigeration cycle apparatus of the present invention has high operation reliability, defrosting time of the apparatus is short and operation efficiency of the apparatus is high. Therefore, the invention can be applied to an air conditioner and a hot water producing apparatus.

## Claims

1. A refrigeration cycle apparatus comprising:
a low temperature-side refrigeration cycle which is formed by annularly and sequentially connecting, to one another, a low temperature-side compressor, a cascade heat exchanger, a low temperature-side decompressor and a low temperature-side evaporator, and through which a low temperature-side refrigerant is circulated;
a high temperature-side refrigeration cycle which is formed by annularly and sequentially connecting, to one another, a high temperature-side compressor, a refrigerant-heating medium heat exchanger, a high temperature-side decompressor and the cascade heat exchanger, through which a high temperature-side refrigerant is circulated, and which heat exchange is carried out between the low temperature-side refrigerant and the high temperature-side refrigerant in the cascade heat exchanger;
defrosting detecting means for detecting a frost-formed state of the low temperature-side evaporator;) and
a controller which determines whether a normal operation should be shifted to a defrosting operation for thawing frost of the low temperature-side evaporator, and whether the defrosting operation should be shifted to the normal operation, **characterized in that**
when the controller determines that the normal operation should be shifted to the defrosting operation by detection of the defrosting detecting means, the controller continues an operation of the low temperature-side compressor, stops an operation of high temperature-side compressor, and shifts the normal operation to the defrosting operation.

2. The refrigeration cycle apparatus according to claim 1, further comprising low temperature-side high pressure detecting means for detecting pressure of the low temperature-side refrigeration cycle, **characterized in that**
when the controller determines that the normal operation should be shifted to the defrosting operation, the controller shifts the normal operation to the defrosting operation after the pressure detected by the low temperature-side high pressure detecting means exceeds predetermined high pressure.

3. The refrigeration cycle apparatus according to claim 1, further comprising cascade heat exchanger temperature detecting means for detecting a temperature of the cascade heat exchanger, **characterized in that**
when the controller determines that the normal operation should be shifted to the defrosting operation, the controller shifts the normal operation to the defrosting operation after the temperature detected by the cascade heat exchanger temperature detecting means exceeds predetermined temperature.

4. The refrigeration cycle apparatus according to any one of claims 1 to 3, **characterized in that**
when the controller determines that the normal operation should be shifted to the defrosting operation, the controller reduces a flow rate of the low temperature-side refrigerant which flows through the low temperature-side decompressor.

5. The refrigeration cycle apparatus according to any one of claims 1 to 4, further comprising a heating medium cycle connecting the refrigerant-heating medium heat exchanger and heating medium circulating means,
a heating medium circulating through the heating medium cycle, and
in the refrigerant-heating medium heat exchanger, heat exchange being carried out between the high temperature-side refrigerant and the heating medium, **characterized in that**
when the controller determines that the normal operation should be shifted to the defrosting operation, the controller reduces a flow rate of the heating medium by the heating medium circulating means.

6. The refrigeration cycle apparatus according to claim 5, **characterized in that** when the controller determines that the normal operation should be shifted to the defrosting operation, the controller stops the heating medium circulation pump.

7. The refrigeration cycle apparatus according to any one of claims 1 to 4, further comprising a heating medium cycle connecting the refrigerant-heating medium heat exchanger and heating medium circulating means,
a heating medium circulating through the heating medium cycle, and
in the refrigerant-heating medium heat exchanger, heat exchange being carried out between the high temperature-side refrigerant and the heating medium, **characterized in that**
when the controller determines that the defrosting operation should be shifted to the normal operation, the controller increases a flow rate of the heating medium by the heating medium circulating means.

8. A hot water producing apparatus using the refrigeration cycle apparatus according to any one of claims 5 to 7, **characterized in that**
the heating medium is water or antifreeze liquid, and the water or the antifreeze liquid heated by the refrigerant-heating medium heat exchanger is utilized for at least one of hot-water supply and room-heating.
